# EUROPÄISCHE PATENTSCHRIFT

(11) **EP 2 958 008 B1**
(45) Veröffentlichungstag und Bekanntmachung des Hinweises auf die Patenterteilung: **25.12.2019**
(21) Anmeldenummer: 15170413.7
(22) Anmeldetag: 03.06.2015
(51) Int. Cl.: G06F 3/12, G06F 17/21, G06Q 10/06, G06Q 10/08

(54) **PRODUKTIONSPLANUNGS- UND STEUERUNGSSYSTEM EINER DRUCKEINRICHTUNG SOWIE VERFAHREN ZUR AUTOMATISIERTEN ERZEUGUNG EINES DRUCKAUFTRAGS**
PRODUCTION PLANNING AND CONTROL SYSTEM FOR A PRINTING DEVICE AND METHOD FOR THE AUTOMATIC GENERATION OF A PRINT JOB
SYSTÈME DE COMMANDE ET DE PLANIFICATION DE PRODUCTION D'UN DISPOSITIF D'IMPRESSION ET PROCÉDÉ DE GÉNÉRATION AUTOMATISÉE D'UNE TÂCHE D'IMPRESSION

(30) Priorität: 17.06.2014 DE 102014108477
(43) Veröffentlichungstag der Anmeldung: 23.12.2015
(73) Patentinhaber: manroland Goss web systems GmbH, 86153 Augsburg (DE)
(72) Erfinder: REISMÜLLER, Franz, 86453 Dasing (DE); METZNER, Andreas, 86482 Aystetten (DE); ELCHLEPP, Andreas, 86551 Aichach (DE); ZIRCHER, Thomas, 86420 Diedorf (DE)

(56) Entgegenhaltungen:
- EP-A2- 0 310 765
- WO-A1-2009/024734
- DE-A1-102012 103 679
- DE-B3-102006 005 634
- US-A- 5 634 091

## Beschreibung

Die Erfindung betrifft ein Verfahren zur automatisierten Erzeugung eines Druckauftrags gemäß dem unabhängigen Patentanspruch. Ferner betrifft die Erfindung ein Verfahren zur automatischen Generierung von Produktionsdatensätzen unter Berücksichtigung der Jobdaten des zu druckenden Auftrages und den Produktionsmöglichkeiten der Verarbeitungseinrichtungen einer Druckeinrichtung.

In Druckereien finden zunehmend zusätzlich zu nicht-druckformvariablen-Druckmaschinen wie beispielsweise Offsetdruckmaschinen oder Tiefdruckmaschinen auch druckformvariable Druckmaschinen wie beispielsweise Digitaldruckmaschinen Verwendung, welche sich im Vergleich zum herkömmlichen Offsetdruck insbesondere dafür eignen, eine Vielzahl wechselnder Druckaufträge zu bearbeiten, z.B. für kleine Druckauflagen. Es hat sich herausgestellt, dass eine Kombination aus beiden Verfahren, also dem Offset- und dem Digitaldruckverfahren (Hybrid-Druckverfahren), wirtschaftliche Vorteile bringen kann sowie neue Möglichkeiten beim Drucken von Produkten eröffnet. So kann beispielsweise eine Personalisierung mittels des Digitaldrucks erfolgen, während mittels des Offset-Drucks die statischen Inhalte gedruckt werden.

Um einen Druckauftrag erzeugen zu können, müssen verschiedene Informationen verarbeitet werden. Es ist bereits bekannt, dass Druckauftragsdaten aufgrund des zu druckenden Jobs und je nachdem, welche Druckeinrichtung zur Verfügung steht, durch eine Planungseinrichtung generiert werden. Die Planungseinrichtung bestimmt, welche der verfügbaren Druckeinrichtungen den Job zu verarbeiten hat, sofern mehrere Möglichkeiten zur Verfügung stehen, was z.B. in der DE 10 2013 102 756.3 ausgeführt wird.

Die WO 2009/024 734 A1 offenbart ein rechnerbasiertes Verfahren zur Erzeugung von Produktionsdatensätzen für herzustellende Druckaufträge.

Aus der US 5,634,091 A ist ein System zur Erzeugung von korrekt ausgeschossenen Druckdaten bekannt, wobei die zu druckenden Inhalte von extern empfangen werden.

Die DE 10 2006 005 634 B3 offenbart ein Verfahren zur Herstellung eines Druckproduktes, wobei ein Druckbogenformat eines Druckbogens derart ausgewählt wird, dass dieser in das erforderliche Seitenformat unter Berücksichtigung der erforderlichen Arbeitsschritte geschnitten wird.

Aus der EP 0 310 765 A2 ist ein Verfahren zur Herstellung eines Ausschießers für eine zu druckende Auflage von Druckexemplaren bekannt.

Bei bekannten Verfahren zur Erzeugung von Druckaufträgen werden für ein gewünschtes Druckprodukt die Daten des zu druckenden Auftrags, auch vereinfacht Jobdaten genannt, mittels eines Druckplanungsmoduls erfasst und beschrieben. Ferner werden die Produktionsmöglichkeiten der an der Produktion beteiligten Komponenten bzw. Verarbeitungseinrichtungen erfasst.

Basierend auf den Daten der Jobbeschreibung wird dann von einem z.B. in der DE 10 2012 103 679 A1 beschriebenen Weiterverarbeitungsplanungsmodul geprüft, ob eine der Druckmaschine nachgelagerte Weiterverarbeitungseinrichtung den von dem Druckplanungsmodul ausgegebenen Auftrag ausführen kann. Wenn dies nicht der Fall ist, wird der Auftrag solange gestoppt, bis er geändert bzw. ausgeführt werden kann. Wenn der Auftrag ausgeführt werden kann, werden die Inhalts- und Jobdaten an den entsprechenden Systemen verarbeitet und bedarfsweise an den Druck- bzw. Weiterverarbeitungsprozess weitergegeben.

Der Nachteil bei den bislang bekannten Verfahren besteht darin, dass bisher keine weiterverarbeitungsabhängige und vollständige Beschreibung unter Berücksichtigung der Anforderungen der Automatisierung eines Druckauftrags erfolgen kann, d.h. es können noch nicht alle für eine vollständige Beschreibung des Druckauftrags benötigten Informationen zentral verarbeitet werden. Es wird immer noch ein erfahrener Benutzer benötigt, der gemäß seiner Erfahrung und der Kenntnis der Weiterverarbeitungseinrichtung den Druckauftrag und die Ausschießanweisung vervollständigt oder es werden, wie oben erwähnt, Module verwendet, die zumindest eine Erkennung ermöglichen, dass ein Druckauftrag in einer nachgelagerten Weiterverarbeitungseinrichtung nicht bearbeitet werden kann und den Auftrag so stoppen.

Diese Unmöglichkeit der Bereitstellung einer vollständigen Beschreibung eines Druckauftrags, d.h. des Produktionsdatensatzes, basierend auf allen Informationen über die Druckeinrichtung macht das Verfahren anfällig für Fehler. Ferner wird es durch die zunehmende Komplexität der Verfahren durch Verwendung von Hybrid-Druckverfahren immer schwieriger für einen Bediener, eine Übersicht über die teilweise tausende an Möglichkeiten zur Erzeugung eines vollständigen Druckauftrags zu behalten.

Um einen vollständig beschriebenen Druckauftrag zu erhalten, muss eine Einbeziehung von dynamischen Daten wie beispielsweise Konfigurationsdaten, Personalisierungen, Sektionierungen, Hybridanteile, eine Berücksichtigung von Daten von prozesstechnisch unterschiedlichen Verfahren bei der Produktbeschreibung und/oder eine Einbeziehung von prozesstechnischen Präferenzen oder zusätzlich notwendigen Elementen, welche nicht zum eigentlichen Produkt gehören, sowie weiterer zusätzlich verfügbarer Daten möglichst automatisiert erfolgen können. Diese Daten werden als Produktionsmöglichkeiten bezeichnet.

Konfigurationsdaten sind beispielsweise Daten, welche die Produktionsmöglichkeiten einer verwendeten Druckmaschine beschreiben. Daten von prozesstechnisch unterschiedlichen Verfahren bei der Produktbeschreibung sind beispielsweise die Integration der jeweils notwendigen Zusatzangaben für die verwendeten Druckeinrichtungen wie eine Plattenabkantung bei Offset-Druckeinrichtungen oder zusätzlich benötigter Raum für Inkjet-Düsenreinigung beim Digitaldruck. Prozesstechnische Präferenzen sind z.B. eine Vermeidung von bekannten Prozess-Fehlerquellen. Zusätzlich notwendige Elemente, welche nicht zum eigentlichen Produkt gehören, sind solche, die z.B. zu Steuerungszwecken dienen, sogenannte Synchronisierungssignaturen, oder solche, die anderen für die Produktion wichtigen Zwecken dienen, beispielsweise Weißsignaturen zur Trennung von Jobs. Ferner sind zusätzlich verfügbare Daten, welche bisher nicht automatisiert berücksichtigt wurden, beispielsweise Daten einer evtl. vorhandenen Nachverarbeitungseinrichtung, z.B. einer Falzeinrichtung, Informationen, dass beispielsweise eine Synchronisierungssignatur benötigt wird, um die Falzeinrichtung auf den neuen Auftrag zu synchronisieren, Informationen, dass eine Weißsignatur benötigt wird, um der (Digital-)Druckeinrichtung die Zeit zu verschaffen, den neuen Druckauftrag einzurichten, Informationen, dass bei der Offset-Druckeinrichtung eine Falzeinrichtung integriert ist, sowie deren Besonderheiten, Falzmöglichkeiten, Anforderungen an die jeweiligen erforderlichen oder zulässigen Produktgrößen, etc.

Das Ziel der vorliegenden Erfindung ist es also, die oben genannten Nachteile einer manuellen Konfiguration der jeweiligen Auftragsdaten zu beheben. Dies wird gelöst durch ein Verfahren zur automatisierten Erzeugung eines Druckauftrags gemäß dem unabhängigen Patentanspruch.

Das Produktionsplanungs- und Steuerungssystem zeichnet sich dadurch aus, dass ein Ausschießmodul vorhanden ist, das alle Informationen und Daten, welche für die Druckeinrichtung zur Verfügung stehen, zentralisiert empfangen kann bzw. abgespeichert hat und basierend auf diesen Daten eine vollständige Beschreibung, also einen Produktionsdatensatz, für den zu druckenden Auftrag erzeugen kann. Die Produktionsdatensätze beinhalten somit sowohl das Ausschießschema beziehungsweise den Ausschießer als auch alle anderen vorher genannten Daten wie beispielsweise erforderliche Synchronisations- oder Weißsignaturen etc. Das Verfahren zeichnet sich dadurch aus, dass ein vollständiger Druckauftrag erzeugt wird, der alle für die Druckeinrichtung zur Verfügung stehenden Daten automatisch in die Generierung eines Produktionsdatensatzes mit einbezieht. Somit kann ohne weiteres menschliches Eingreifen eine vollständige und eindeutige Beschreibung eines Druckauftrags, d.h. ein Produktionsdatensatz, generiert werden, so dass eine weitere Automatisierung der Druckeinrichtung sowie ein weniger fehleranfälliges System zur Verfügung gestellt werden kann. Vorteilhafte Ausführungsformen der vorliegenden Erfindung werden in den Unteransprüchen wiedergegeben.

Nachstehend ist die Erfindung anhand der beigefügten Zeichnung, welche lediglich Aspekte darstellt, näher erläutert. Es zeigt:
Fig. 1: Eine Darstellung des Produktionsplanungs- und Steuerungssystems zur automatischen Erstellung eines Produktionsdatensatzes gemäß eines ersten Aspekts der vorliegenden Erfindung
Fig. 2: Eine Darstellung des Produktionsplanungs- und Steuerungssystems zur automatischen Erstellung eines Produktionsdatensatzes gemäß eines zweiten Aspekts der vorliegenden Erfindung
Fig. 3: Eine Darstellung des Produktionsplanungs- und Steuerungssystems zur automatischen Erstellung eines Produktionsdatensatzes gemäß reines dritten Aspekts der vorliegenden Erfindung

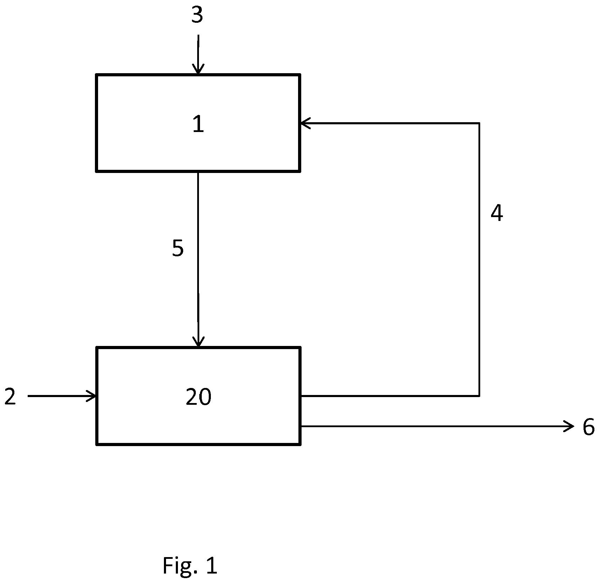

Dargestellt und beschrieben ist mit Bezug zu Fig. 1 ein erster Aspekt der vorliegenden Erfindung, die eine automatische Erzeugung eines Produktionsdatensatzes 5, d. h. eines vollständigen Datensatzes eines Druckauftrages durch das Ausschießmodul 1 umfasst, wobei die Druckeinrichtung 2 nur eine einzige Druckmaschine 20 umfasst, hier eine Offset-Druckmaschine. Zur Erstellung eines Produktionsdatensatzes 5, der die Erstellung eines vollständigen Druckauftrags ermöglicht, werden die Jobdaten 3 des zu druckenden Auftrags sowie die Produktionsmöglichkeiten 4 der hier als Beispiel angeführten Offset-Druckmaschine 20 an das Ausschießmodul 1 übergeben. Die Produktionsmöglichkeiten 4 umfassen hierbei beispielsweise die Konfiguration der nicht-druckformvariablen Druckmaschine, wie beispielsweise eine Offset-Druckmaschine, Informationen, ob die beispielhaft genannte Offset-Druckmaschine eine integrierte Weiterverarbeitungseinrichtung umfasst, ob bzw. welche Farben sie drucken kann, welche Bahnbreite möglich ist, etc. Diese Daten werden zusammen mit zusätzlich verfügbaren Daten, die für die Erstellung des Druckauftrags benötigt werden, in dem Ausschießmodul 1 zentral zusammengeführt, dort verarbeitet und es wird ein vollständiger Druckauftrag in Form eines Produktionsdatensatzes 5 erzeugt, der an die Druckeinrichtung 2 zur Verarbeitung weitergegeben wird.

Fig. 1 ist natürlich auch auf eine druckformvariable Druckmaschine wie beispielsweise eine Digital-Druckmaschine anwendbar, wobei hier neben den allgemeinen Parametern auch Personalisierungsdaten in den Produktionsdatensatz mit einfließen können.

Nicht dargestellt, jedoch erfindungsgemäß mit abgedeckt ist die Variante, bei der die Druckeinrichtung aus der Kombination von mindestens einer nicht-druckformvariablen Druckmaschine und mindestens einer druckformvariablen Druckmaschine besteht, wie dies beispielsweise bei Verpackungsdruckmaschinen zu Anwendung kommt, wo teilweise mehrere nicht-druckformvariable Druckverfahren wie beispielsweise das Offset-Druckverfahren, das Tiefdruckverfahren, das Hochdruck- bzw. Flexodruckverfahren oder das Siebdruckverfahren mit mehreren druckformvariablen Druckverfahren wie beispielsweise das Inkjet-Verfahren, tonerbasierte Digitaldruckverfahren etc. kombiniert werden.

Durch das Verarbeiten aller für einen Druckauftrag benötigten Daten in einer zentralen Einrichtung, dem Ausschießmodul 1, kann ein Produktionsdatensatz 5 erzeugt werden, der das Eingreifen durch einen menschlichen Bediener zur Fertigstellung des Druckauftrags obsolet macht, d.h. es wird ein vollständig automatisiertes Verfahren zur Verfügung gestellt.

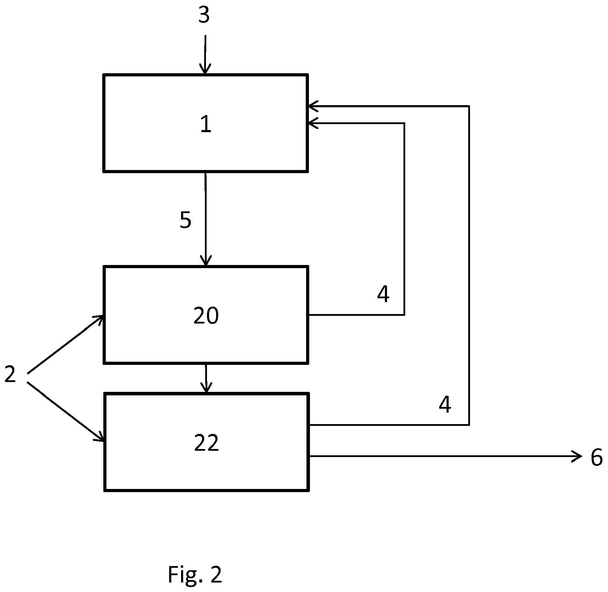

Dargestellt und beschrieben ist mit Bezug zu Fig. 2 ein zweiter Aspekt der vorliegenden Erfindung, die eine automatische Erzeugung eines Produktionsdatensatzes 5 durch das Ausschießmodul 1 umfasst, wobei die Druckeinrichtung 2 eine Druckmaschine 20, hier eine Digital-Druckmaschine, sowie eine der Druckmaschine nachgelagerte Weiterverarbeitungseinrichtung 22, hier beispielsweise eine kombinierte Schneide- und Falzeinrichtung, umfasst.

Als Weiterverarbeitungseinrichtung 22 werden aber alle dem Druckprozess nachgeordneten Vorrichtungen zur weiteren Bearbeitung bzw. Veredelung des Druckproduktes wie beispielsweise Schneideinrichtungen, Falzeinrichtungen, kombinierte Schneide- und Falzeinrichtungen, Sammel- bzw. Stapeleinrichtungen, Einrichtungen zum Perforieren, Stanzen, Kleben, Lackieren, dem Folientransfer uvm. betrachtet. Hierbei kann auch eine Kombination mehrerer gleicher oder verschiedener vorgenannter Weiterverarbeitungseinrichtungen 22 zum Einsatz kommen.

Die einzelnen Komponenten einer Druckeinrichtung 2 wie beispielsweise nicht-druckformvariable oder druckformvariable Druckmaschinen 20 oder Weiterverarbeitungseinrichtungen 22 werden allgemein auch als Verarbeitungseinrichtungen bezeichnet.

Die Erstellung eines Produktionsdatensatzes 5 erfolgt wie im ersten Aspekt, nur mit dem Unterschied, dass die Druckeinrichtung 2 hier aus zwei voneinander getrennten Einrichtungen besteht, der Digitaldruckmaschine 20 und der Weiterverarbeitungseinrichtung 22. Somit werden dem Ausschießmodul 1 Produktionsmöglichkeiten 4 der beiden Einrichtungen separat übergeben, dort gespeichert und in Verbindung mit den Jobdaten 3 des zu druckenden Auftrags zu einem Produktionsdatensatz 5 verarbeitet, der dann an die Druckmaschine 20 zur Verarbeitung weitergegeben wird. Die Druckmaschine 20 kann dann den Auftrag gemäß dem ihr übergebenen Ausschießschema oder beispielsweise benötigten Personalisierungsdaten drucken und direkt an die Weiterverarbeitungseinrichtung 22 weiterleiten, da der Produktionsdatensatz 5 auch die Produktionsmöglichkeiten 4 der Weiterverarbeitungseinrichtung 22 bei der Erstellung des Produktionsdatensatzes 5 berücksichtigt hat. Somit ist keine weitere Berechnung durch ein separates Modul oder ein sonstiges Eingreifen, z.B. des Menschen, bis zur Fertigstellung des Druckprodukts 6 nötig. Folglich wird somit die Automatisierung der Druckeinrichtung 2 deutlich erhöht sowie die Fehlerwahrscheinlichkeit durch externes Eingreifen deutlich gesenkt.

Die Erfindung umfasst aber auch den Aspekt, bei dem die in Fig. 2 gezeigte Druckeinrichtung 2 aus einer nicht-druckformvariablen Druckmaschine 20 und einer nachgeschalteten Weiterverarbeitungseinrichtung 22 besteht. Die Erzeugung eines Produktionsdatensatzes erfolgt in gleicher Weise, jedoch können bei diesem Aspekt keine Personalisierungsdaten berücksichtigt werden.

Eine in Fig. 2 nicht gezeigte, wenngleich erfindungsgemäß berücksichtigte vorzugsweise Ausgestaltung der Druckeinrichtung 2 ist die, bei welcher mindestens eine nicht-druckformvariable Druckmaschine 20 mit mindestens einer, d. h. gegebenenfalls auch mehreren hintereinander geschalteten bzw. angeordneten Nachverarbeitungseinrichtungen 22 zum Einsatz kommen, wie dies beispielsweise bei nicht-druckformvariablen Verpackungsdruckmaschinen, bei welchen teilweise mehrere Druckverfahren genutzt werden, der Fall ist.

Eine weitere vorteilhafte, in Fig. 2 ebenfalls nicht dargestellte Ausgestaltung der Erfindung ist die, bei welcher ein Produktionsdatensatz 5 für eine Druckeinrichtung 2 generiert wird, welche aus mindestens einer druckformvariablen Druckmaschine 20 mit mindestens einer, d. h. gegebenenfalls auch mehreren hintereinander geschalteten bzw. angeordneten Nachverarbeitungseinrichtungen 22 besteht. Eine derartige Konfiguration kann beispielsweise bei druckformvariablen Anlagen mit Veredelung oder druckformvariablem Druck höherer und niedrigerer Qualitätsmerkmale zum Einsatz kommen.

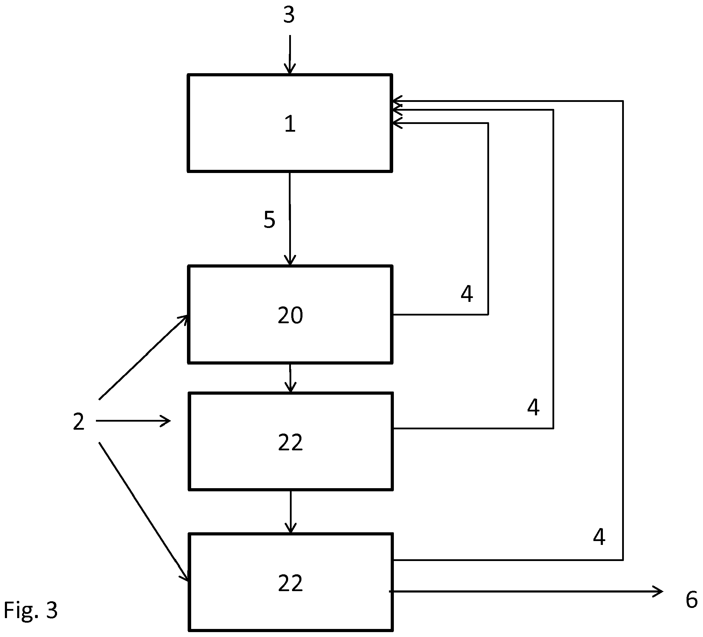

Dargestellt und beschrieben ist mit Bezug zu Fig. 3 ein dritter Aspekt der vorliegenden Erfindung, die eine automatische Erzeugung eines Produktionsdatensatzes 5 durch das Ausschießmodul 1 umfasst, wobei als Druckeinrichtung 2 ein Hybridsystem zur Verfügung steht, das in diesem Beispiel aus einer nicht-druckformvariablen Druckmaschine 20 wie beispielsweise eine Offset-Druckmaschine und einer der nicht-druckformvariablen Druckmaschine 20 nachgelagerten druckformvariablen Druckmaschine 20, wie beispielsweise eine Digitaldruckmaschine mit nachgelagerter Weiterverarbeitungseinrichtung 22 besteht. In diesem Aspekt wird ein erster Teil eines Druckauftrags in der nicht-druckformvariablen Druckmaschine 20 gedruckt, das entstandene Zwischenprodukt dann in der druckformvariablen Druckmaschine 20 fertiggedruckt, z.B. mit einer Personalisierung versehen, und abschließend in der Weiterverarbeitungseinrichtung 22 zum fertigen Produkt verarbeitet, z.B. durch Schneiden und Falzen.

Eine weitere, äußerst vorteilhafte Ausgestaltung der Erfindung, welche jedoch in Fig. 3 nicht dargestellt ist, ist die, bei welcher ein Produktionsdatensatz 5 für eine Druckeinrichtung 2 generiert wird, welche aus mindestens einer nicht-druckformvariablen Druckmaschine 20, aus mindestens einer druckformvariablen Druckmaschine 20 sowie aus mindestens einer Nachverarbeitungseinrichtung 22 besteht. Derartige Konfigurationen sind beispielsweise für den Verpackungsdruck relevant, bei welchem mehrere nicht-druckformvariable Druckverfahren mit mindestens einem druckformvariablen Verfahren mit teilweise komplexer Nachverarbeitungs-Maschinerie kombiniert werden.

Prinzipiell erfolgt die Erzeugung des Produktionsdatensatzes 5 wie in den vorangegangenen Beispielen, nur sind komplexere Berechnungen zur Erzeugung des Produktionsdatensatzes 5 nötig. Es werden nämlich in dem Ausschießmodul 1 die Jobdaten 3 des zu druckenden Auftrags mit den Produktionsmöglichkeiten 4 der in der Druckeinheit 2 vorhandenen Einrichtungen, also den Produktionsmöglichkeiten 4 der nicht-druckformvariablen Druckmaschine 20, der druckformvariablen Druckmaschine 20, und der Weiterverarbeitungseinrichtung 22, beim Erzeugen des Produktionsdatensatzes 5 miteinander so verknüpft, dass basierend auf diesen Daten ein Produktionsdatensatz 5 erzeugt werden kann, mit dem ohne ein weiteres Verändern oder Hinzufügen von Daten oder Informationen zur Verarbeitung das gewünschte Produkt gemäß dem Druckauftrag hinsichtlich der Realisierbarkeit überprüft bzw. hergestellt werden kann. Es wird hier also eine komplexe Verarbeitung von Daten der einzelnen Maschinen durchgeführt, durch die ein Produktionsdatensatz 5 für dieses Hybridverfahren erzeugt wird.

Ein weiterer, nicht in den Figuren dargestellter Aspekt der vorliegenden Erfindung umfasst die Möglichkeit, den Produktionsdatensatz 5 basierend auf einem bereits teilweise fertiggestellten Druckauftrag, d.h. vorhandenen zusätzlichen Informationen, den Jobdaten 3 sowie den Produktmöglichkeiten 4 der in der Druckeinrichtung 2 vorhandenen Einrichtungen zu erzeugen.

Bei diesem Aspekt werden ähnlich wie bei dem Hybrid-Druckverfahren alle Produktmöglichkeiten 4 der zur Ausführung des Druckauftrags benötigten Einrichtungen an das Ausschießmodul 1 übergeben. Zusätzlich werden noch die Daten eines bereits teilweise fertiggestellten Druckauftrags als weitere Eingangsvariablen an das Ausschießmodul 1 übergeben, so dass für die Fertigstellung des Druckprodukts 6 ein passender Produktionsdatensatz 5 erzeugt werden kann.

Bevorzugt richtet sich die Erzeugung des Produktionsdatensatzes 5 nach der Einrichtung, welche die geringste Flexibilität für die Verarbeitung und/oder die restriktivsten Vorgaben bzw. Einschränkungen aufweist, also das "schwächste" Glied in der Produktionskette ist. Basierend auf den Vorgaben dieses "schwächsten" Glieds werden die Produktionsmöglichkeiten 4 der anderen Einrichtungen dann entsprechend durchsucht, um den passenden Produktionsdatensatz 5 zu erzeugen, der den Druckauftrag so vollständig beschreibt, dass eine automatische Verarbeitung bis zum Endprodukt erfolgen kann.

Durch die oben gegebenen Beispiele ist zu sehen, dass das Ausschießmodul 1 für jegliche Konfiguration der Druckeinheit 2 einen Produktionsdatensatz 5 automatisch erzeugen kann. Das Ausschießmodul 1 kann in einer Druckstraße integriert sein, eignet sich aber auch zur Nachrüstung mindestens einer bereits vorhandenen Druckeinrichtung 2. Ferner ist die Steuerung nicht vom Hersteller der einzelnen Verarbeitungseinrichtungen abhängig.

Die Ausgabe des Druckauftrags bzw. des Produktionsdatensatzes 5 kann mittels einer xml-Datei oder einer anderen computerlesbaren Datei erfolgen. Jedenfalls kann ein Format zur Ausgabe entsprechend den verwendeten Verarbeitungseinrichtungen gewählt werden.

Das beanspruchte Verfahren zur automatischen Erstellung eines vollständigen Druckauftrags gemäß der vorliegenden Erfindung wird durch die Figuren 1, 2 und 3 veranschaulicht und im Folgenden beschrieben. In einem ersten Schritt wird ein zu druckender Auftrag an das Produktionsplanungs- und Steuerungssystem, genauer an das Ausschießmodul 1 übergeben, aus dem Jobdaten 3 erzeugt werden. Zusätzlich werden von den in der Druckeinrichtung 2 vorhandenen Verarbeitungseinrichtungen, wie mindestens einer nicht-druckformvariablen Druckmaschine 20 wie beispielsweise eine Offset-Druckmaschine, mindestens einer druckformvariablen Druckmaschine 20 wie beispielsweise eine Digital-Druckmaschine und einer Weiterverarbeitungseinrichtung 22 wie beispielsweise einer Schneide-/Falzeinrichtung gemäß dem dritten Aspekt, die jeweiligen Produktionsmöglichkeiten 4 an das Ausschießmodul 1 übergeben bzw. sind darin bereits vorhanden. Basierend auf den vorhandenen bzw. übergebenen Daten und Informationen berechnet das Ausschießmodul 1 Daten für einen Produktionsdatensatz 5, erzeugt diesen und übergibt optional den Produktionsdatensatz 5, also den Datensatz des vollständigen Druckauftrages, schließlich an die erste Verarbeitungseinrichtung in der Druckeinheit 2. Der Produktionsdatensatz 5 wird unter Berücksichtigung aller bekannten Daten und Informationen so erzeugt, dass dieser von der ersten Verarbeitungseinrichtung bis zur letzten Verarbeitungseinrichtung keine weitere Modifikation benötigt. Somit wird ein neuartiges und vollautomatisiertes Verfahren zur Herstellung eines Druckproduktes 6 zur Verfügung gestellt.

Die Erfindung ermöglicht es, beliebig komplexe Druckeinrichtungen 2 so zu steuern, dass ein vollständig beschriebener Druckauftrag an die erste Verarbeitungseinheit der Druckeinrichtung 2 übergeben wird, bei dem bereits alle nachfolgend auszuführenden Schritte und Eirichtungen berücksichtigt sind, so dass ein stark erhöhter Automatisierungsgrad der Druckeinrichtung 2 erzielt werden kann. Die Produktionsmöglichkeiten 4 der einzelnen Einrichtungen der Druckeinrichtung 2 können entweder durch die Geräteart selbst bekannt sein, d.h. durch die vom Hersteller vorgegebenen Spezifikationen, oder mittels Schnittstellen, Software, Sensoren oder anderer Messtechnik direkt gemessen werden und so an das Ausschießmodul 1 übergeben werden.

### Bezugszeichenliste

- 1: Ausschießmodul
- 2: Druckeinrichtung
- 20: Druckmaschine
- 22: Weiterverarbeitungseinrichtung
- 3: Jobdaten
- 4: Produktionsmöglichkeiten
- 5: Produktionsdatensatz
- 6: Druckprodukt

Verfahren zum automatisierten Erstellen von Produktionsdatensätzen. Der Nachteil von bislang bekannten Vorrichtungen und Verfahren zum Erstellen von Produktionsdatensätzen besteht darin, dass sowohl für nicht-druckformvariable als auch insbesondere für druckformvariable Druckmaschinen keine weiterverarbeitungsabhängige Beschreibung unter Berücksichtigung der Anforderungen der Automatisierung des Druckauftrags erfolgen kann. Das Produktionsplanungs- und Steuerungssystem zeichnet sich dadurch aus, dass ein Ausschießmodul vorhanden ist, das alle Informationen und Daten, welche für die Druckeinrichtung zur Verfügung stehen, zentralisiert empfangen kann.

## Patentansprüche

1. Verfahren zum automatisierten Erstellen von Produktionsdatensätzen (5) für zu druckende Aufträge in einer Druckeinrichtung (2), wobei die Druckeinrichtung als Verarbeitungseinrichtungen zumindest eine druckformvariable Druckmaschine (20) und zumindest eine nicht-druckformvariable Druckmaschine (20) und zumindest eine Weiterverarbeitungseinrichtung (22) umfasst, **dadurch gekennzeichnet, dass** Jobdaten (3) eines zu druckenden Auftrags einem Ausschießmodul (1) zugeführt werden,
wobei Produktionsmöglichkeiten (4) der zumindest zwei in der Druckeinrichtung (2) vorhandenen Druckmaschinen (20) dem Ausschießmodul (1) von den zumindest zwei Druckmaschinen (20) separat zur Verfügung gestellt und in dem Ausschießmodul (1) zentral zusammengeführt und gespeichert werden,
wobei Produktionsmöglichkeiten (4) der zumindest einen in der Druckeinrichtung (2) vorhandenen Weiterverarbeitungseinrichtung (22) dem Ausschießmodul (1) von der zumindest einen Weiterverarbeitungseinrichtung (22) separat zur Verfügung gestellt und in dem Ausschießmodul (1) zentral zusammengeführt und gespeichert werden, und
wobei das Ausschießmodul (1) basierend auf den Jobdaten (3), den Produktionsmöglichkeiten (4) der zumindest zwei Druckmaschinen (20) und der Produktionsmöglichkeiten (4) der zumindest einen Weiterverarbeitungseinrichtung (22) automatisiert einen vollständigen Produktionsdatensatz (5) für den zu druckenden Auftrag erstellt, derart, dass basierend auf den Produktionsmöglichkeiten (4) der Verarbeitungseinrichtung (20, 22), welche die geringste Flexibilität für die Verarbeitung und/oder die restriktivsten Einschränkungen aufweist, die Produktionsmöglichkeiten (4) der anderen Verarbeitungseinrichtungen (20, 22) durchsucht werden, um den Produktionsdatensatz (5) zu erzeugen, der den Druckauftrag so vollständig beschreibt, dass eine automatische Verarbeitung bis zum Endprodukt erfolgen kann,
wobei der vollständige Produktionsdatensatz (5) eine eindeutige Beschreibung des zu druckenden Auftrags darstellt und den für den Auftrag generierten Ausschießer sowie für die Verarbeitung benötigte weitere Informationen zur Synchronisierung und zur Trennung von aufeinanderfolgenden Aufträgen umfasst,
wobei der Produktionsdatensatz (5) für den zu druckenden Auftrag an die Druckeinrichtung (2) zur Verarbeitung übergeben wird, derart, dass der Produktionsdatensatz (5) den zumindest zwei Druckmaschinen (20) zur Verarbeitung übergeben wird, wobei die zumindest zwei Druckmaschinen (20) den Auftrag gemäß dem ihnen übergebenen Produktionsdatensatz (5) drucken und direkt an die zumindest eine Weiterverarbeitungseinrichtung (22) weiterleiten.

2. Verfahren nach Anspruch 1, wobei die zumindest eine Weiterverarbeitungseinrichtung (22) eine Einrichtung zur weiteren Bearbeitung bzw. Veredelung des Druckproduktes wie beispielsweise eine Schneideinrichtung und/oder eine Falzeinrichtung und/oder eine kombinierte Schneide- und Falzeinrichtung und/oder eine Sammel- bzw. Stapeleinrichtung und/oder eine Einrichtung zum Perforieren und/oder eine Einrichtung zum Stanzen und/oder eine Einrichtung zum Kleben und/oder eine Einrichtung zum Lackieren und/oder eine Einrichtung zum Folientransfer umfasst.

3. Verfahren nach Anspruch 1 oder 2, wobei die Jobdaten (3) des zu druckenden Auftrags Informationen umfassen, ob der Auftrag bereits eine Vorverarbeitung erfahren hat.

## Claims

1. A method for automatically generating production data sets (5) for orders to be printed in a printing facility (2), wherein the printing facility comprises at least one printing-forme variable printing press (20) and at least one printing forme-invariable printing press (20) and at least one further processing device (22) as processing devices,
**characterized in that** job data (3) of an order to be printed are supplied to an imposition module (1),
wherein production possibilities (4) of the at least two printing presses (20), which are present in the printing facility (2), are provided separately to the imposition module (1) by the at least two printing presses (20), and are brought together centrally and are stored in the imposition module (1),
wherein production possibilities (4) of the at least one further processing device (22), which is present in the printing facility (2), is provided separately to the imposition module (1) by the at least one further processing device (22), and are brought together centrally and are stored in the imposition module (1), and
wherein, based on the job data (3), the production possibilities (4) of the at least two printing presses (20), and the production possibilities (4) of the at least one further processing device (22), the imposition module (1) generates a complete production data set (5) for the order to be printed in an automated manner such that, based on the production possibilities (4) of the processing device (20, 22), which has the least flexibility for the processing and/or the most restrictive limitations, the production possibilities (4) of the other processing devices (20, 22) are searched in order to generate the production data set (5), which describes the print order so completely that an automatic processing all the way to the final product can take place,
wherein the complete production data set (5) represents a clear description of the order to be printed, and comprises the imposition pattern generated for the order as well as further information required for the processing, relating to the synchronization and to the separation of consecutive orders,
wherein the production data set (5) for the order to be printed is transferred to the printing facility (2) for processing such that the production data set (5) is transferred to the at least two printing presses (20) for processing, wherein the at least two printing presses (20) print the order according to the production data set (5) transferred to them, and forward it directly to the at least one further processing device (22).

2. The method according to claim 1, wherein the at least one further processing device (22) comprises a device for further processing or finishing, respectively, the printed product, such as, for example, a cutting device and/or a folding device and/or a combined cutting and folding device and/or a collecting or stacking device, respectively, and/or a device for perforating and/or a device for punching and/or a device for gluing and/or a device for coating and/or a device for foil transfer.

3. The method according to claim 1 or 2, wherein the job data (3) of the order to be printed comprise information as to whether the order has already experienced a pre-processing.

## Revendications

1. Procédé d'établissement automatique de jeux de données de production (5) pour des commandes à imprimer dans un dispositif d'impression (2), le dispositif d'impression présentant comme dispositifs de traitement au moins une machine d'impression à cliché d'impression variable (20) et au moins une machine d'impression à cliché d'impression non variable (20) et au moins un dispositif de traitement ultérieur (22),
**caractérisé en ce que** des données de tâches (3) d'une commande à imprimer sont acheminées à un module d'imposition (1),
des possibilités de production (4) des au moins deux machines d'impression (20) disponibles dans le dispositif d'impression (2) étant mises séparément à disposition du module d'imposition (1) par les au moins deux machines d'impression (20) et réunies et enregistrées au niveau central dans le module d'imposition (1),
des possibilités de production (4) de l'au moins un dispositif de traitement ultérieur (22) disponible dans le dispositif d'impression (2) étant mises séparément à disposition du module d'imposition (1) par l'au moins un dispositif de traitement ultérieur (22) et réunies et enregistrées au niveau central dans le module d'imposition (1), et
le module d'imposition (1) établissant de manière automatisée, en se basant sur les données de tâches (3), les possibilités de production (4) des au moins deux machines d'impression (20) et les possibilités de production (4) de l'au moins un dispositif de traitement ultérieur (22), un jeu complet de données de production (5) pour la commande à imprimer de manière à ce que, en se basant sur les possibilités de production (4) du dispositif de traitement ultérieur (20, 22) qui présente la plus faible flexibilité pour le traitement et/ou les limitations les plus restrictives, les possibilités de production (4) des autres dispositifs de transformation (20, 22) soient étudiées pour générer le jeu de données de production (5) qui décrit la commande d'impression assez complètement pour qu'un traitement automatique puisse avoir lieu jusqu'au produit final,
le jeu de données de production complet (5) constituant une description univoque de la commande imprimer et comprenant le trieur généré pour la commande, de même que d'autres informations nécessaires au traitement pour la synchronisation et pour la séparation de commandes successives,
le jeu de données de production (5) pour la commande à imprimer étant transféré au dispositif d'impression (2) pour traitement de manière à ce que le jeu de données de production (5) soit transféré aux au moins deux machines d'impression (20) pour traitement, les au moins deux machines d'impression (20) imprimant la commande conformément au jeu de données de production (5) qui leur est transféré et le retransmettant directement à l'au moins un dispositif de traitement ultérieur (22).

2. Procédé selon la revendication 1, dans lequel le dispositif de traitement ultérieur (22) comprend un dispositif de finition ou de traitement ultérieur du produit d'impression, comme par exemple un dispositif de coupe et/ou un dispositif de pliage et/ou un dispositif combiné de coupe et de pliage et/ou un dispositif de collecte ou d'empilement et/ou un dispositif de perforation et/ou un dispositif d'estampage et/ou un dispositif de collage et/ou un dispositif de vernissage et/ou un dispositif de transfert de films.

3. Procédé selon la revendication 1 ou 2, dans lequel les données de tâches (3) de la commande à imprimer comprennent des informations indiquant si la commande a déjà subi un traitement préliminaire.
